# EUROPÄISCHE PATENTSCHRIFT

(11) **EP 3 510 307 B1**
(45) Veröffentlichungstag und Bekanntmachung des Hinweises auf die Patenterteilung: **13.05.2020**
(21) Anmeldenummer: 17825752.3
(22) Anmeldetag: 28.11.2017
(51) Int. Cl.: F16K 7/17, F16K 27/02

(54) **MEMBRANVENTIL**
DIAPHRAGM VALVE
SOUPAPE À MEMBRANE

(30) Priorität: 19.01.2017 DE 202017100281 U
(43) Veröffentlichungstag der Anmeldung: 17.07.2019
(73) Patentinhaber: Neoperl GmbH, 79379 Müllheim (DE)
(72) Erfinder: TEMPEL, Marc, 79111 Freiburg (DE)
(74) Vertreter: Mertzlufft-Paufler, Cornelius
(86) Internationale Anmeldenummer: PCT/EP2017/080583
(87) Internationale Veröffentlichungsnummer: WO 2018/133980

(56) Entgegenhaltungen:
- DE-U1-202009 013 401
- DE-U1-202010 018 358
- US-A- 5 090 393

## Beschreibung

Die Erfindung betrifft ein Membranventil mit einem Gehäuse und einer innerhalb des Gehäuses angeordneten Membrane, deren Mittelbereich zum Schließen und/oder Öffnen eines Ventilsitzes hin und her bewegbar ist, wobei die Membrane mit einem Einspannbereich zwischen zwei Gehäuseteilen eingespannt ist, wobei die Membrane wenigstens eine Dichtfläche aufweist.

Der Einspannbereich kann hierbei einen Ventilkörper beweglich tragen, mit dem der Ventilsitz verschlossen und geöffnet werden kann.

Ein solches Membranventil ist beispielsweise aus DE 10 2010 060 085 A1 und DE 20 2010 018 358 U1 bekannt, wobei die Membrane Dichtflächen aufweist, die im Wesentlichen in einer Richtung parallel zur Einspannrichtung ausgerichtet sind. Die Dichtflächen sind somit in Bezug auf eine Längsachse des Membranventils radial orientiert.

Die US 5 090 393 A betrifft ein Druckregelventil für den Einbau in eine Entlüftungsleitung an einer Brennkraftmaschine. Das Druckregelventil weist ein Ventilgehäuse auf, dass aus einem topfförmigen Gehäuseunterteil und einem Gehäusedeckel zusammengesetzt ist. Der Übergang zwischen dem Gehäusedeckel und dem Gehäuseunterteil ist mittels eines dazwischen eingeklemmten Membranventilkörpers abgedichtet. Am Gehäuseunterteil ist dazu eine Nut ausgebildet, in welche der Membranventilkörper mit seinem Einsteckbereich eingeführt ist.

Aus der DE 20 2010 018 358 U1 ist ein Membranventil mit einem Gehäuse und einer innerhalb des Gehäuses angeordneten Membrane bekannt, deren Mittelbereich zum Schließen und/oder Öffnen eines Ventilsatzes hin- oder herbewegbar ist. Die Membrane weist dabei Dichtflächen auf, die im Wesentlichen in einer Richtung parallel zur Einspannrichtung ausgerichtet sind.

Der Erfindung liegt die Aufgabe zugrunde, eine Alternative zu den vorbekannten Membranventilen bereitzustellen, insbesondere um eine einfachere Montage zu ermöglichen.

Zur Lösung der Aufgabe sind erfindungsgemäß die Merkmale von Anspruch 1 vorgesehen. Insbesondere wird somit erfindungsgemäß bei einem Membranventil der eingangs beschriebenen Art zur Lösung der Aufgabe vorgeschlagen, dass die wenigstens eine Dichtfläche zumindest im Wesentlichen in einer Richtung quer zu einer Einspannrichtung ausgerichtet und an einer Stirnseite eines zumindest im Wesentlichen in einer Richtung parallel zur Einspannrichtung verlaufenden Einsteckbereichs ausgebildet ist, insbesondere dass die wenigstens eine Dichtfläche in einer Richtung quer zu einer Einspannrichtung ausgerichtet und an einer Stirnseite eines in einer Richtung parallel zur Einspannrichtung verlaufenden Einsteckbereichs ausgebildet ist, dass der Einsteckbereich in eine korrespondierende Ausnehmung an einem Gehäuseteil der zwei Gehäuseteile eingreift und dass in der Ausnehmung ein von einem Ausnehmungsgrund abragender Dichtvorsprung ausgebildet ist, der gegen die wenigstens eine Dichtfläche drückt. Es sind somit in Bezug auf eine Längsachse des Membranventils axiale Dichtflächen ausgebildet. Durch den Dichtvorsprung lässt sich eine hohe Dichtigkeit erreichen, obwohl der Einsteckbereich in seiner ganzen Länge durch einen Anpressdruck verformt wird. Der Einsteckbereich dient somit in radialer Richtung nicht der Dichtung, sondern lediglich als Zuganker. Die Erfindung bietet gegenüber einem Einspannen der Membrane beidseits des ebenfalls als Zuganker dienenden Einsteckbereichs den Vorteil, dass die Membrane ungehindert arbeiten kann. Die Dichtfläche ist geschützt in der Ausnehmung anordenbar.

Bei einer Ausgestaltung der Erfindung kann vorgesehen sein, dass der Einsteckbereich von dem Einspannbereich in einem Winkel, vorzugsweise einem rechten Winkel, als ein Vorsprung abragt. Somit kann der Einsteckbereich zusätzlich zu seiner Dichtfunktion auch die Funktion eines Zugankers übernehmen, wenn die Ausnehmung entsprechend ausgestalten ist.

Bei einer Ausgestaltung der Erfindung kann vorgesehen sein, dass der Einsteckbereich um den Einspannbereich umlaufend ausgebildet ist. Somit ist eine Zugbelastung entlang des gesamten Umfangs der Membrane aufnehmbar. Besonders günstig ist es, wenn der Einsteckbereich mit einem gleichbleibenden Profil, beispielsweise einem vorzugsweise abgerundet rechteckigen oder trapezförmigen Profil, ausgebildet ist. Dies ermöglicht eine gute Ausfüllung der Ausnehmung.

Bei einer Ausgestaltung der Erfindung kann vorgesehen sein, dass die Ausnehmung um den Einspannbereich umlaufend ausgebildet ist. Von Vorteil ist dabei, dass eine Membrane in unbestimmter Orientierung oder Ausrichtung einsetzbar ist, insbesondere bei einer kreisförmig verlaufenden Ausnehmung. Somit ist außerdem ein umlaufend ausgebildeter Einsteckbereich aufnehmbar.

Allgemein kann gesagt werden, dass eine bevorzugte Ausgestaltung eine Membrane mit kreisrunder Kontur hat. Die Begriffe radial und axial, die in Bezug auf die erwähnte Längsachse definiert sind, lassen sich somit auf eine derartige Membrane anwenden, wenn die Längsachse senkrecht zu der zumindest im Wesentlichen ebenen Membran ausgerichtet ist und diese zentral durchläuft, insbesondere wenn die Längsachse senkrecht zu der ebenen Membran ausgerichtet ist und diese zentral durchläuft.

Bei einer Ausgestaltung der Erfindung kann vorgesehen sein, dass sich der Dichtvorsprung über eine Länge der Ausnehmung erstreckt. Somit ist eine allseitige Abdichtung der Membrane an ihrem gesamten Umfang einfach erreichbar.

Bei einer Ausgestaltung der Erfindung kann vorgesehen sein, dass in Bezug auf den Einspannbereich auf einer dem Einsteckbereich gegenüberliegenden Seite ein weiterer Einsteckbereich ausgebildet ist, der in eine korrespondierende Ausnehmung an einem weiteren Gehäuseteil der zwei Gehäuseteile eingreift. Dies ermöglicht ein beidseitiges Fassen - oberhalb und unterhalb - der Membrane.

Bei einer Ausgestaltung der Erfindung kann vorgesehen sein, dass eine weitere Dichtfläche zumindest im Wesentlichen in einer Richtung quer zur Einspannrichtung ausgerichtet und an einer Stirnseite des zumindest im Wesentlichen in einer Richtung parallel zur Einspannrichtung verlaufenden weiteren Einsteckbereichs ausgebildet ist, insbesondere dass eine weitere Dichtfläche in einer Richtung quer zur Einspannrichtung ausgerichtet und an einer Stirnseite des in einer Richtung parallel zur Einspannrichtung verlaufenden weiteren Einsteckbereichs ausgebildet ist. Der weitere Einsteckbereich kann zum einen als weiterer Zuganker eine Zugbelastung der Membrane mit aufnehmen. Zum anderen kann die weitere Dichtfläche als Anlagefläche verwendet werden, um eine Kraft, die auf die Dichtfläche einwirkt, aufzunehmen.

Hierbei kann vorgesehen sein, dass in der Ausnehmung des weiteren Gehäuseteils ein von einem Ausnehmungsgrund abragender weiterer Dichtvorsprung ausgebildet ist, der gegen die weitere Dichtfläche drückt. Somit ist ober- und unterhalb der Membrane ein dichter Abschluss ausbildbar.

Bei einer Ausgestaltung der Erfindung kann vorgesehen sein, dass der Einsteckbereich mit einem Spiel in die jeweilige Ausnehmung einsteckbar ist. Das Spiel kann beispielsweise dadurch realisiert sein, dass ein quer zur Einspannrichtung gemessener Außendurchmesser des Einsteckbereichs zumindest teilweise geringer als ein quer zur Einspannrichtung gemessener Innendurchmesser der Ausnehmung ausgebildet ist. Von Vorteil ist dabei, dass beim Einstecken des Einsteckbereichs in die Ausnehmung ein geringer oder gar kein Widerstand überwunden werden muss. Gleiches kann alternativ oder zusätzlich für den weiteren Einsteckbereich gelten. Dies kann zur Folge haben, dass im eingeführten Zustand des wenigstens einen Einsteckbereichs in die wenigstens eine Ausnehmung wenigstens ein Spalt zwischen einer lateralen Innenwand der Ausnehmung und einer lateralen Außenwand des Einsteckbereichs ausgebildet ist. Ein Anpressdruck zwischen der Außenwand des Einsteckbereichs und der Innenwand der Ausnehmung kann daher zwischen einer Stirnseite des Einsteckbereichs und einem Bodenbereich der Ausnehmung, insbesondere einem Dichtvorsprung der Ausnehmung, am größten sein. Somit kann die Montage des Membranventils durch Ausbildung eines Spiels deutlich erleichtert werden. Gleichzeitig ist jedoch trotz des Spiels überraschenderweise eine gute Abdichtung zwischen Einsteckbereich und Ausnehmung möglich.

Bei einer Ausgestaltung der Erfindung kann vorgesehen sein, dass die Dichtfläche zumindest im Wesentlichen eben ausgebildet ist. Es ist somit ein zumindest im Wesentlichen - beispielsweise bis auf eine Verformung durch den Dichtvorsprung - flächiges Anliegen, insbesondere ein flächiges Anliegen, der Dichtfläche an dem Ausnehmungsgrund erreichbar, insbesondere unabhängig von einer genauen Positionierung des Einsteckbereichs in der Ausnehmung. Insbesondere dass bei einer Ausgestaltung der Erfindung vorgesehen sein kann, dass die Dichtfläche eben ausgebildet ist. Besonders günstig ist es dabei, wenn die Dichtfläche nutfrei ausgebildet ist. Materialschwächungen aufgrund von Kerbwirkungen, die sich bei Ausbildung einer Nut leicht ergeben können, sind so vermeidbar. Gleiches kann alternativ oder zusätzlich für die weitere Dichtfläche gelten.

Bei einer Ausgestaltung der Erfindung kann vorgesehen sein, dass die Ausnehmung in dem Gehäuseteil zum zugehörigen Ausnehmungsgrund hin eine Verengung bildet. Somit ist eine Einführhilfe ausbildbar, mit welcher der Einsteckbereich einfach in Bezug auf den Dichtvorsprung ausrichtbar ist.

Alternativ oder zusätzlich kann vorgesehen sein, dass die Ausnehmung in dem weiteren Gehäuseteil zum zugehörigen Ausnehmungsgrund hin eine Verengung bildet. Auch hier ist somit eine definierte Ausrichtung der weiteren Dichtfläche in der Ausnehmung beim Einstecken erreichbar. Besonders günstig ist es, wenn die Ausnehmungen zueinander spiegelsymmetrisch, insbesondere in Bezug auf eine zwischen den Gehäuseteilen verlaufende Symmetrieebene, ausgebildet sind.

Bei einer Ausgestaltung der Erfindung kann vorgesehen sein, dass der Dichtvorsprung einen zu einem freien Ende verjüngenden Querschnitt aufweist. Somit kann sich der Dichtvorsprung einfach in die Membrane eingraben. Ein keilförmiger Querschnitt ist hierbei besonders einfach fertigbar.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt:
- Fig. 1: eine Seitenansicht eines erfindungsgemäßen Membranventils,
- Fig. 2: eine Schnittansicht entlang A-A des Membranventils gemäß Figur 1 und
- Fig. 3: eine Detailvergrößerung aus Figur 2.

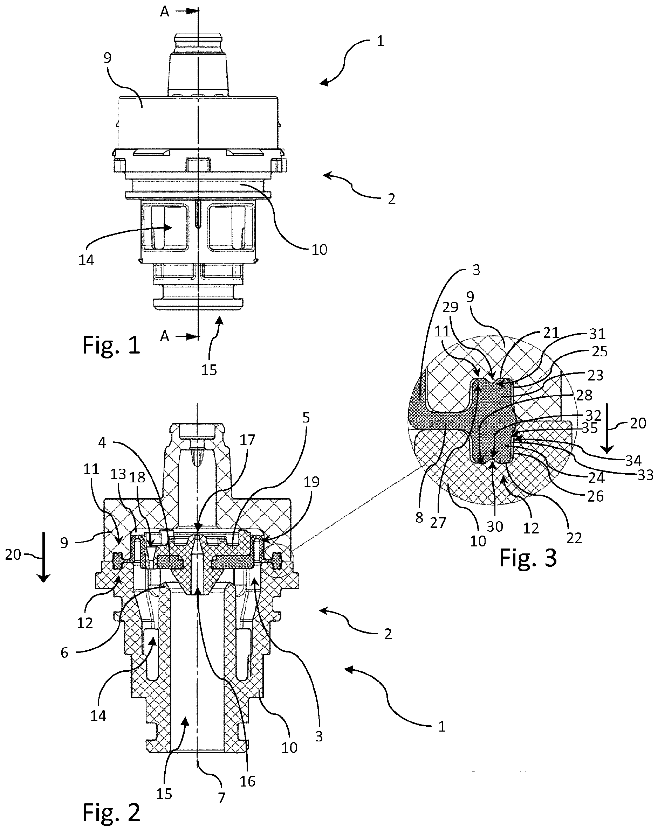

Die Figuren 1 bis 3 zeigen ein im Ganzen mit 1 bezeichnetes erfindungsgemäßes Membranventil in unterschiedlichen Ansichten und werden daher gemeinsam beschrieben.

Das Membranventil 1 hat ein Gehäuse 2, das eine Membrane 3 aufnimmt und gehäusebildend umgibt.

Ein Mittelbereich 4 der Membrane 3 trägt einen Ventilkörper 5, der zwischen einer in Figur 2 dargestellten oberen Position und einer nicht weiter dargestellten unteren Position, in welcher der Mittelbereich 4 der Membrane 3 mit dem Ventilkörper 5 auf einem Ventilsitz 6 aufliegt und diesen Ventilsitz 6 dicht verschließt, beweglich ist.

Die Membrane 3 ist radial außen in Bezug auf eine Längsachse 7 des Membranventils 1, welche gleichzeitig die Bewegungsrichtung des Ventilkörpers 5 beschreibt, mit einem Einspannbereich 8 zwischen einem ersten Gehäuseteil 9 und einem zweiten Gehäuseteil 10 eingespannt.

Das erste Gehäuseteil 9 und das zweite Gehäuseteil 10 bilden hierbei das Gehäuse 2, gegebenenfalls mit weiteren Gehäuseteilen.

Die Membrane 3 weist hierbei eine erste Dichtfläche 11 und eine zweite Dichtfläche 12 auf, mit denen sie eine Druckkammer 13 einerseits und einen Zulauf 14 andererseits nach außen abdichtet.

Der Zulauf 14 ist über den Ventilsitz 6 mit einem Ablauf 15 verbunden, wenn der Ventilkörper 5 in der erwähnten oberen Position befindlich ist, und von diesem getrennt, wenn der Ventilkörper 5 in der unteren Position auf dem Ventilsitz 6 angeordnet ist. Zum Überführen des Ventilkörpers 5 in die untere Schließposition wird eine Entlastungsöffnung 16 an einem Hilfsventilsitz 17 mit einem nicht weiter dargestellten Hilfsventilkörper verschlossen, so dass die Druckkammer 13 über eine Befüllöffnung 18 in der Membrane 3 befüllt wird. Durch den Druckanstieg - gegebenenfalls unterstützt durch eine Federkraft - wird der Ventilkörper 5 in die Schließposition überführt.

Zum Öffnen des Membranventils 1 wird der Hilfsventilsitz 17 freigegeben, so dass sich die Druckkammer 13 über die Entlastungsöffnung 13 in den Ablauf 15 entleeren kann. Diese Druckentlastung führt dazu, dass der Innendruck im Zulauf 14 ein Entfernen des Ventilkörpers 5 aus dem Ventilsitz 6 erzwingt, so dass eine Flüssigkeit aus dem Zulauf 14 in den Ablauf 15 fließen kann.

Zwischen dem Einspannbereich 8 und dem Mittelbereich 4 ist ein Faltenbereich 19 ausgebildet, welcher die Beweglichkeit der Membrane 3 sicherstellt. Die Membrane 3 ist hierbei aus einem elastischen Material, beispielsweise Gummi, oder Silikon gefertigt.

Die Dichtflächen 11, 12 sind im Wesentlichen in einer Richtung orientiert, die eine Ausrichtung quer zur Einspannrichtung 20 ergibt. Dies bedeutet, dass die Normalen auf den Dichtflächen 11, 12 jeweils parallel oder in etwa parallel zu der Einspannrichtung 20, mit welcher das erste Gehäuseteil 9 gegen das zweite Gehäuseteil 10 zusammengesetzt wird, verlaufen.

Hierzu sind die Dichtflächen 11, 12 jeweils an einer Stirnseite 21, 22 eines Einsteckbereichs 23, 24 ausgebildet.

Hierbei greift im montierten Zustand der Einsteckbereich 23 in eine korrespondierende Ausnehmung 25 an dem ersten Gehäuseteil 11 ein, während der Einsteckbereich 24 in eine korrespondierende Ausnehmung 26 an dem zweiten Gehäuseteil 10 eingesteckt ist.

An jedem der Ausnehmungen 25, 26 ist an einem Ausnehmungsgrund 27, 28 ein Dichtvorsprung 29, 30 ausgebildet, der in die jeweilige Dichtfläche 11, 12 gedrückt ist.

Um das Einstecken in die Ausnehmungen 25, 26 zu ermöglichen, ist jeder der Einsteckbereiche 23, 24 als Vorsprung ausgebildet, der in einem rechten Winkel in Bezug auf den Einspannbereich 8 ausgerichtet ist und von diesem Einspannbereich 8 abragt.

Die Einsteckbereiche 23, 24 laufen jeweils um den Einspannbereich 8 herum und weisen entlang ihrer Verlaufrichtung ein gleichbleibendes Profil auf.

Korrespondierend hierzu ist die jeweilige Ausnehmung 25, 26 ebenfalls um den Einspannbereich 8 umlaufend ausgebildet und mit einem Querschnitt versehen, so dass eine Nut gebildet ist.

Der Dichtvorsprung 29, 30 ist jeweils ebenfalls umlaufend ausgebildet und erstreckt sich somit über die gesamte Länge der jeweiligen Ausnehmung 25, 26.

Die Einsteckbereiche 23, 24 sind in Bezug auf den Einspannbereich 8 auf einander gegenüberliegenden Seiten ausgebildet, so dass sie in die beiden Aufnahmen der Aufnehmungen 25, 26 eingreifen können.

Die Dichtflächen 11, 12 sind somit zueinander parallel ausgerichtet.

Die Dichtvorsprünge 29, 30 werden bei einem Zusammenpressen des ersten Gehäuseteils 9 gegen das zweite Gehäuseteil 10 in die jeweilige Dichtfläche 11 bzw. 12 eingepresst.

Die Dichtflächen 11, 12 sind jedoch vor diesem Einpressvorgang als ebene, ringförmig umlaufende Flächen ausgebildet.

Eine Nut oder dergleichen zur Aufnahme der Dichtvorsprünge 29, 30 ist somit in den Dichtflächen 11, 12 nicht ausgebildet, so dass eine Abdichtung nicht davon abhängt, ob die Einsteckbereiche 23, 24 in den jeweiligen Ausnehmungen 25, 26 richtig orientiert eingesteckt sind.

Die Ausnehmungen 25, 26 weisen zum jeweiligen Ausnehmungsgrund 27, 28 hin eine Verengung auf und bilden so eine Einführhilfe für die Einsteckbereiche 23, 24.

Die Dichtvorsprünge 29, 30 weisen - wie in Figur 3 ersichtlich ist - einen Querschnitt auf, der sich zu dem jeweiligen freien Ende 31, 32 hin verjüngt. Somit bilden die Dichtvorsprünge 29, 30 im Querschnitt eine von dem Ausnehmungsgrund 27 bzw. 28 abragende Keilform.

Es ist ersichtlich, da die Einsteckbereiche 23, 24 in radialer Richtung, also seitlich zu ihrer Verlaufsrichtung von den Ausnehmungen 25, 26 beabstandet ausgebildet sind.

Bei dem Membranventil 1, bei welchem eine Membrane 3 zwischen zwei Gehäuseteilen 9, 10 eingespannt ist und bei welchem mit der Membrane 3 ein Ventilsitz 6 öffenbar und verschließbar ist, wird somit vorgeschlagen, radial außerhalb eines Einspannbereichs 8 wenigstens einen Einspannbereich 23 auszubilden, der von dem Einspannbereich 8 absteht und an dessen Stirnseite 21, 22 eine Dichtfläche 11, 12 ausgebildet ist.

Ist der Einsteckbereich 23, 24 in die wenigstens eine Ausnehmung 25, 26 eingeführt, so ist zwischen den beiden wenigstens ein Spalt 33 ausgebildet. Der Spalt 33 ist dabei insbesondere zwischen einer lateralen Innenwand 34 der Ausnehmung 25, 26 und einer lateralen Außenwand 35 des Einsteckbereichs 23, 24 ausgebildet. Durch den Spalt 33 kann der Einsteckbereich 23, 24 mit einem Spiel in die jeweilige Ausnehmung 25, 26 eingesteckt werden. Somit ist die Montage des Membranventils 1 deutlich vereinfacht.

Um eine ausreichende Abdichtung zwischen der Membrane 3 und den Gehäuseteilen 9, 10 trotz Ausbildung des Spaltes 33 zu erreichen, ist ein Anpressdruck zwischen der Außenwand des Einsteckbereichs 23, 24 und der Innenwand der Ausnehmung 25, 26 daher zwischen einer Stirnseite 21, 22 des Einsteckbereichs 23, 24 und einem Bodenbereich der Ausnehmung 25, 26 am größten. Dabei ist der erzeugte Anpressdruck besonders im Bereich des Dichtvorsprungs 29, 30 besonders groß. In diesem Bereich ist somit eine ausreichende Abdichtung ausgebildet.

### Bezugszeichenliste

- 1: Membranventil
- 2: Gehäuse
- 3: Membrane
- 4: Mittelbereich
- 5: Ventilkörper
- 6: Ventilsitz
- 7: Längsachse
- 8: Einspannbereich
- 9: (erstes) Gehäuseteil
- 10: (zweites) Gehäuseteil
- 11: (erste) Dichtfläche
- 12: (zweite) Dichtfläche
- 13: Druckkammer
- 14: Zulauf
- 15: Ablauf
- 16: Entlastungsöffnung
- 17: Hilfsventilsitz
- 18: Befüllöffnung
- 19: Faltenbereich
- 20: Einspannrichtung
- 21: Stirnseite
- 22: Stirnseite
- 23: Einsteckbereich
- 24: Einsteckbereich
- 25: Ausnehmung
- 26: Ausnehmung
- 27: Ausnehmungsgrund
- 28: Ausnehmungsgrund
- 29: Dichtvorsprung
- 30: Dichtvorsprung
- 31: freies Ende
- 32: freies Ende
- 33: Spalt
- 34: laterale Innenwand
- 35: laterale Außenwand

## Patentansprüche

1. Membranventil (1) mit einem Gehäuse (2) und einer innerhalb des Gehäuses (2) angeordneten Membrane (3), deren Mittelbereich (4) zum Schließen und/oder Öffnen eines Ventilsitzes (6) hin und her bewegbar ist, wobei die Membrane (3) mit einem Einspannbereich (8) zwischen zwei Gehäuseteilen (9, 10) eingespannt ist, wobei die Membrane (3) wenigstens eine Dichtfläche (11, 12) aufweist, wobei die Dichtfläche (11, 12) an einem Einsteckbereich (23, 24) ausgebildet ist, wobei der Einsteckbereich (23, 24) in eine korrespondierende Ausnehmung (25, 26) an einem Gehäuseteil (9, 10) der zwei Gehäuseteile (9, 10) eingreift und wobei in der Ausnehmung (25, 26) ein von einem Ausnehmungsgrund (27, 28) abragender Dichtvorsprung (29, 30) ausgebildet ist, der gegen die wenigstens eine Dichtfläche (11, 12) drückt, **dadurch gekennzeichnet, dass** die wenigstens eine Dichtfläche (11, 12) im Wesentlichen in einer Richtung quer zu einer Einspannrichtung (20) ausgerichtet und an einer Stirnseite (21, 22) des im Wesentlichen in einer Richtung parallel zur Einspannrichtung (20) verlaufenden Einsteckbereichs (23, 24) ausgebildet ist, dass in Bezug auf den Einspannbereich (8) auf einer dem Einsteckbereich (23, 24) gegenüberliegenden Seite ein weiterer Einsteckbereich (23, 24) ausgebildet ist, der in eine korrespondierende Ausnehmung (25, 26) an einem weiteren Gehäuseteil (9, 10) der zwei Gehäuseteile (9, 10) eingreift, und dass der Einsteckbereich (23, 24) und/oder der weitere Einsteckbereich (23, 24) mit einem Spiel in die jeweilige Ausnehmung (25, 26) einsteckbar ist/sind.

2. Membranventil (1) nach Anspruch 1, **dadurch gekennzeichnet, dass** der Einsteckbereich (23, 24) von dem Einspannbereich (8) in einem Winkel als ein Vorsprung abragt und/oder dass der Einsteckbereich (23, 24) um den Einspannbereich (8) umlaufend, insbesondere mit einem gleichbleibenden Profil, ausgebildet ist.

3. Membranventil (1) nach einem der vorangehenden Ansprüche, **dadurch gekennzeichnet, dass** die Ausnehmung (25, 26) um den Einspannbereich (8) umlaufend ausgebildet ist und/oder dass sich der Dichtvorsprung (29, 30) über eine Länge der Ausnehmung (25, 26) erstreckt.

4. Membranventil (1) nach einem der vorangehenden Ansprüche, **dadurch gekennzeichnet, dass** eine weitere Dichtfläche (11, 12) im Wesentlichen in einer Richtung quer zur Einspannrichtung (20) ausgerichtet und an einer Stirnseite (21, 22) des im Wesentlichen in einer Richtung parallel zur Einspannrichtung (20) verlaufenden weiteren Einsteckbereichs (23, 24) ausgebildet ist, insbesondere wobei in der Ausnehmung (25, 26) des weiteren Gehäuseteils (9, 10) ein von einem Ausnehmungsgrund (27, 28) abragender weiterer Dichtvorsprung (29, 30) ausgebildet ist, der gegen die weitere Dichtfläche (11, 12) drückt.

5. Membranventil (1) nach einem der vorangehenden Ansprüche, **dadurch gekennzeichnet, dass** die Dichtfläche (11, 12) und/oder die weitere Dichtfläche (11, 12) im Wesentlichen eben, insbesondere nutfrei, ausgebildet ist/sind.

6. Membranventil (1) nach einem der vorangehenden Ansprüche, **dadurch gekennzeichnet, dass** die Ausnehmung (25, 26) in dem Gehäuseteil (9, 10) und/oder in dem weiteren Gehäuseteil (9, 10) zum zugehörigen Ausnehmungsgrund (27, 28) hin eine Verengung bildet/bilden.

7. Membranventil (1) nach einem der vorangehenden Ansprüche, **dadurch gekennzeichnet, dass** der Dichtvorsprung (29, 30) einen zu einem freien Ende (31, 32) verjüngenden, insbesondere keilförmigen, Querschnitt aufweist.

8. Membranventil (1) nach einem der vorangehenden Ansprüche, **dadurch gekennzeichnet, dass** im eingeführten Zustand des wenigstens einen Einsteckbereichs (23, 24) in die wenigstens eine Ausnehmung (25, 26) wenigstens ein Spalt (33) zwischen einer lateralen Innenwand (34) der Ausnehmung (25, 26) und einer lateralen Außenwand (35) des Einsteckbereichs (23, 24) ausgebildet ist.

## Claims

1. Diaphragm valve (1) having a housing (2) and a diaphragm (3) which is arranged within the housing (2) and the center region (4) of which can be moved to and fro in order to close and/or open a valve seat (6), the diaphragm (3) being clamped in by way of a clamping region (8) between two housing parts (9, 10), the diaphragm (3) having at least one sealing face (11, 12), the sealing face (11, 12) being configured on a plug-in region (23, 24), the plug-in region (23, 24) engaging into a corresponding recess (25, 26) on one housing part (9, 10) of the two housing parts (9, 10), and a sealing projection (29, 30) which protrudes from a recess bottom (27, 28) and presses against the at least one sealing face (11, 12) being configured in the recess (25, 26), **characterized in that** the at least one sealing face (11, 12) is oriented substantially in a direction transversely with respect to a clamping direction (20) and is configured on an end side (21, 22) of the plug-in region (23, 24) which runs substantially in a direction parallel to the clamping direction (20), **in that** a further plug-in region (23, 24) is configured in relation to the clamping region (8) on a side which lies opposite the plug-in region (23, 24), which further plug-in region (23, 24) engages into a corresponding recess (25, 26) on a further housing part (9, 10) of the two housing parts (9, 10), and **in that** the plug-in region (23, 24) and/or the further plug-in region (23, 24) can be plugged with a play into the respective recess (25, 26).

2. Diaphragm valve (1) according to Claim 1, **characterized in that** the plug-in region (23, 24) protrudes as a projection from the clamping region (8) at an angle, and/or **in that** the plug-in region (23, 24) is configured so as to run around the clamping region (8), in particular with a constant profile.

3. Diaphragm valve (1) according to either of the preceding claims, **characterized in that** the recess (25, 26) is configured so as to run around the clamping region (8), and/or **in that** the sealing projection (29, 30) extends over a length of the recess (25, 26).

4. Diaphragm valve (1) according to one of the preceding claims, **characterized in that** a further sealing face (11, 12) is oriented substantially in a direction transversely with respect to the clamping direction (20), and is configured on an end side (21, 22) of the further plug-in region (23, 24) which runs substantially in a direction parallel to the clamping direction (20), a further sealing projection (29, 30) which protrudes from a recess bottom (27, 28) and presses against the further sealing face (11, 12) being configured, in particular, in the recess (25, 26) of the further housing part (9, 10).

5. Diaphragm valve (1) according to one of the preceding claims, **characterized in that** the sealing face (11, 12) and/or the further sealing face (11, 12) are/is of substantially planar, in particular groove-free, configuration.

6. Diaphragm valve (1) according to one of the preceding claims, **characterized in that** the recess (25, 26) in the housing part (9, 10) and/or in the further housing part (9, 10) form/forms a constriction toward the associated recess bottom (27, 28).

7. Diaphragm valve (1) according to one of the preceding claims, **characterized in that** the sealing projection (29, 30) has a cross section which is, in particular, wedge-shaped and tapers toward a free end (31, 32).

8. Diaphragm valve (1) according to one of the preceding claims, **characterized in that**, in the introduced state of the at least one plug-in region (23, 24) into the at least one recess (25, 26), at least one gap (33) is configured between a lateral inner wall (34) of the recess (25, 26) and a lateral outer wall (35) of the plug-in region (23, 24).

## Revendications

1. Soupape à membrane (1) avec un boîtier (2) et une membrane (3) disposée à l'intérieur du boîtier (2), dont la région centrale (4) est déplaçable en va-et-vient pour la fermeture et/ou l'ouverture d'un siège de soupape (6), dans laquelle la membrane (3) est serrée avec une région de serrage (8) entre deux parties de boîtier (9, 10), dans laquelle la membrane (3) présente au moins une face d'étanchéité (11, 12), dans laquelle la face d'étanchéité (11, 12) est formée sur une région d'engagement (23, 24), dans laquelle la région d'engagement (23, 24) est engagée dans un évidement correspondant (25, 26) sur une partie de boîtier (9, 10) des deux parties de boîtier (9, 10) et dans laquelle un ergot d'étanchéité (29, 30) saillant dans un fond d'évidement (27, 28) est formé dans l'évidement (25, 26), et presse contre ladite au moins une face d'étanchéité (11, 12), **caractérisée en ce que** ladite au moins une face d'étanchéité (11, 12) est orientée essentiellement dans une direction transversale à une direction de serrage (20) et est formée sur une face frontale (21, 22) de la région d'engagement (23, 24) qui s'étend essentiellement dans une direction parallèle à la direction de serrage (20), **en ce qu'**une autre région d'engagement (23, 24) est formée sur une face opposée à la région d'engagement (23, 24) par rapport à la région de serrage (8), qui s'engage dans un évidement correspondant (25, 26) sur une autre partie de boîtier (9, 10) des deux parties de boîtier (9, 10), et **en ce que** la région d'engagement (23, 24) et/ou l'autre région d'engagement (23, 24) peut/peuvent être engagée(s) avec un jeu dans l'évidement respectif (25, 26).

2. Soupape à membrane (1) selon la revendication 1, **caractérisée en ce que** la région d'engagement (23, 24) est saillante sous forme d'ergot en forme d'angle sur la région de serrage (8) et/ou **en ce que** la région d'engagement (23, 24) est formée autour de la région de serrage (8), en particulier avec un profil invariable.

3. Soupape à membrane (1) selon l'une quelconque des revendications précédentes, **caractérisée en ce que** l'évidement (25, 26) est formé autour de la région de serrage (8) et/ou **en ce que** l'ergot d'étanchéité (29, 30) s'étend sur une longueur de l'évidement (25, 26).

4. Soupape à membrane (1) selon l'une quelconque des revendications précédentes, **caractérisée en ce qu'**une autre face d'étanchéité (11, 12) est orientée essentiellement dans une direction transversale à la direction de serrage (20) et est formée sur une face frontale (21, 22) de la région d'engagement (23, 24) s'étendant dans une direction parallèle à la direction de serrage (20), en particulier dans laquelle un autre ergot d'étanchéité (29, 30) saillant sur un fond d'évidement (27, 28) est formé dans l'évidement (25, 26) de l'autre partie de boîtier (9, 10), et presse contre l'autre face d'étanchéité (11, 12).

5. Soupape à membrane (1) selon l'une quelconque des revendications précédentes, **caractérisée en ce que** la face d'étanchéité (11, 12) et/ou l'autre face d'étanchéité (11, 12) est/sont essentiellement plane(s), en particulier est/sont réalisée(s) sans rainure(s).

6. Soupape à membrane (1) selon l'une quelconque des revendications précédentes, **caractérisée en ce que** l'évidement (25, 26) forme/forment dans la partie de boîtier (9, 10) et/ou dans l'autre partie de boîter (9, 10) un étranglement en direction du fond d'évidement correspondant (27, 28).

7. Soupape à membrane (1) selon l'une quelconque des revendications précédentes, **caractérisée en ce que** l'ergot d'étanchéité (29, 30) présente une section transversale qui diminue en direction d'une extrémité libre (31, 32), en particulier en forme de coin.

8. Soupape à membrane (1) selon l'une quelconque des revendications précédentes, **caractérisée en ce que** dans l'état introduit de ladite au moins une région d'engagement 23, 24) dans ledit au moins un évidement (15, 26) au moins une fente (33) est formée entre une paroi latérale intérieure (34) de l'évidement (25, 26) et une paroi latérale extérieure (35) de la région d'engagement (23, 24).
